# EUROPEAN PATENT APPLICATION

(11) **EP 4 840 802 A1**
(43) Date of publication of application: **18.11.2026**
(21) Application number: 24917115.8
(22) Date of filing: 21.10.2024
(51) Int. Cl.: B65G 57/32, B65G 47/90

(54) **WORKPIECE SUPPLY DEVICE AND CONTROL METHOD**

(30) Priority: 11.01.2024 JP 2024002670
(71) Applicant: Murata Machinery, Ltd., Kyoto-shi, Kyoto 601-8326 (JP)
(72) Inventor: ONOGI, Yasutaka, Kyoto-shi, Kyoto 612-8686 (JP)
(74) Representative: Hoffmann Eitle
(86) International application number: PCT/JP2024/037402
(87) International publication number: WO 2025/150241

(57) **Abstract**

[Problem] To provide a workpiece supplier and a workpiece supply method capable of reducing temporary stoppage of a machine caused by loading or unloading operations performed by an operator using a handcart.

[Means to Solve Problem] A workpiece supplier 3 that arranges, from among a plurality of trays 300, a tray 300 for which transfer of workpieces W is performed by a loader 2, at a predetermined position, the workpiece supplier 3 comprising: a plurality of pallets 200, each having placed thereon a group of trays 300 in which a plurality of the trays 300 are stacked in tiers; a transporter 10 that circulates each of the plurality of pallets 200 along a predetermined circulation path 100; and a tray changer 20 that is capable of raising and lowering the pallet 200 that has been loaded into a first specific region SA1 on the circulation path 100 and that holds, at the predetermined position, the tray 300 of an uppermost tier on the pallet 200 that has been raised, wherein the tray changer 20 is capable of stacking the trays 300 at the predetermined position in tiers onto the pallet 200 in a second specific region SA2 on the circulation path 100.

## Description

### Technical Field

The present invention relates to a workpiece supplier and a control method.

### Background Art

Conventionally, a workpiece supplier has been known in which, from among multiple trays stacked in tiers in a first specific region, an uppermost tray is arranged at a transfer position where workpiece transfer with a loader is performed (for example, see Patent Literature 1). The workpiece supplier stacks a tray for which workpiece transfer with the loader has been completed in a second specific region adjacent to the first specific region, and arranges a tray of the next tier in the first specific region at the transfer position.

### Citation List

### Patent Literature

[Patent Literature 1] Japanese Unexamined Patent Application, First Publication No. H6-106442

### Summary of Invention

### Technical Problem

When multiple trays stacked in tiers are loaded into the first specific region or when trays stacked in tiers in the second specific region are unloaded, a handcart is generally used. For example, when no trays remain in the first specific region, an operator stacks multiple trays in tiers on a handcart and loads the trays into the first specific region.

However, while the loading operation by the operator is being performed, workpiece transfer becomes difficult. Therefore, the workpiece supplier needs to be temporarily stopped, which consequently requires the loader to be temporarily stopped. Such a problem is not limited to the loading operation performed by the operator, and a similar problem may also arise when the operator performs an unloading operation of trays.

An object of the present invention is to provide a workpiece supplier and a workpiece supply method capable of reducing temporary stoppage of a machine caused by loading or unloading operations performed by an operator using a handcart.

### Means for Solving Problem

A workpiece supplier according to an aspect of the present invention is a workpiece supplier that arranges, from among a plurality of trays, a tray for which workpiece transfer is performed by a loader, at a predetermined position, the workpiece supplier comprising: a plurality of pallets, each having placed thereon a group of trays in which a plurality of the trays are stacked in tiers; a transporter that circulates each of the plurality of pallets along a predetermined circulation path; and a tray changer that is capable of raising and lowering the pallet that has been loaded into a first specific region on the circulation path and that holds, at the predetermined position, the tray of an uppermost tier on the pallet that has been raised, wherein the tray changer stacks the tray at the predetermined position in tiers onto the pallet in a second specific region on the circulation path.

A control method according to an aspect of the present invention is a control method for a workpiece supplier that arranges, from among a plurality of trays, a tray for which workpiece transfer is performed by a loader, at a predetermined position, wherein the workpiece supplier has a circulation path that is preliminarily set, the control method comprising: circulating a plurality of groups of trays, in each of which a plurality of the trays are stacked in tiers, along the circulation path; raising the tray of an uppermost tier in the first specific region on the circulation path and holding the tray at the predetermined position; and stacking, upon completion of workpiece transfer, the tray at the predetermined position in tiers in the second specific region on the circulation path.

### Advantageous Effects of the Invention

The workpiece supplier and the control method therefor according to an aspect of the present invention circulate multiple tray groups along a predetermined circulation path 100 and hold the uppermost tray on a pallet loaded into the first specific region on the circulation path at a predetermined position. The workpiece supplier stacks the tray at the predetermined position in tiers onto a pallet in a second specific region SA2 on the circulation path. With such a configuration, trays can be loaded into the first specific region or unloaded from the second specific region multiple times without using a handcart, thereby reducing temporary machine stoppages caused by loading or unloading operations performed by an operator. Moreover, material trays can be loaded into the transporter during operation, making it possible to significantly reduce machine stoppages caused by loading or unloading operations performed by an operator.

In the workpiece supplier of the above aspect, the workpiece transfer may include a first operation in which a material, which is the workpiece before machining, is removed by the loader from the tray at the predetermined position, and a second operation in which a finished product, which is the workpiece after machining, is placed by the loader at a position on the tray where the material removed in the first operation was placed.

In the workpiece supplier of the above aspect, the tray changer may stack in tiers, onto the pallet in the second specific region, the tray for which workpiece transfer has been completed. With such a configuration, temporary stoppages of the machine caused by tray loading operations before workpiece transfer and tray unloading operations after completion of workpiece transfer can be reduced.

In the workpiece supplier of the above aspect, upon stacking all of the pallets in the first specific region in tiers in the second specific region, the transporter may circulate each of the plurality of pallets so as to thereby unload the group of trays in the second specific region from the second specific region and load a new group of trays into the first specific region.

In the workpiece supplier of the above aspect, the tray changer may include a first lifter capable of raising and lowering a first pallet that is the pallet in the first specific region, a second lifter capable of raising and lowering a second pallet that is the pallet in the second specific region, a holder that holds the tray of the uppermost tier on the first pallet at the predetermined position when the first pallet is raised, and a movement controller that slide-moves the holder between the first specific region and the second specific region, and upon completion of workpiece transfer, the movement controller may cause the holder to slide-move, while the holder is holding the tray at the predetermined position, from the first specific region to the second specific region. The tray changer may raise the second pallet by means of the second lifter and stack in tiers, on the second pallet, the tray held by the holder that has been slide-moved to the second specific region.

### Brief Description of the Drawings

Fig. 1 is a schematic configuration diagram of a workpiece transport system according to the present embodiment.
Fig. 2 is a view of a workpiece supplier according to the present embodiment as viewed from the Z direction.
Fig. 3 is a view of the workpiece supplier according to the present embodiment as viewed from the X direction.
Fig. 4 is a view of the workpiece supplier according to the present embodiment as viewed from the Y direction.
Fig. 5 is a flowchart of an operation of the workpiece supplier 3 according to the present embodiment.
Fig. 6 is a diagram showing an initial state according to the present embodiment.
Fig. 7 is a diagram showing a state in which a pallet is raised by a first lifter according to the present embodiment.
Fig. 8 is a diagram showing a state in which a first pallet is lowered with the uppermost tray according to the present embodiment being held.
Fig. 9 is a diagram showing a state in which workpiece transfer is being performed between the uppermost tray and the loader according to the present embodiment.
Fig. 10 is a diagram showing a state in which a holder holding a completed tray according to the present embodiment is moved to above a second specific region.
Fig. 11 is a diagram showing a state in which a second pallet according to the present embodiment is raised and the completed tray is supported from below by the second pallet.
Fig. 12 is a diagram showing a state in which the second pallet according to the present embodiment is lowered.
Fig. 13 is a schematic diagram showing a state in which all trays on the first pallet according to the present embodiment are stacked in tiers on the second pallet.
Fig. 14 is a perspective view of the workpiece supplier in the state shown in Fig. 13.
Fig. 15 is a perspective view of the workpiece supplier after circulation of the pallets according to the present embodiment.
Fig. 16 is a diagram showing a case in which a transporter according to the present embodiment is in an initial state.
Fig. 17 is a diagram showing a state in which all trays placed on a pallet according to the present embodiment are stacked in tiers on a pallet serving as a final pallet.
Fig. 18 is a diagram showing a state after the pallets are circulated from the state shown in Fig. 17.
Fig. 19 is a diagram showing a state in which the final pallet according to the present embodiment is arranged in the first specific region.

### Description of Embodiments

Hereinafter, the present invention will be described through an embodiment. However, the following embodiment does not limit the invention according to the claims, and not all combinations of features described in the embodiment are essential to the means by which the present invention solves the above problems. In the drawings, the same or similar members are denoted by the same reference signs, and redundant descriptions may be omitted. The shapes and sizes of elements in the drawings may be exaggerated for clarity, and the dimensions and shapes may differ from the actual product.

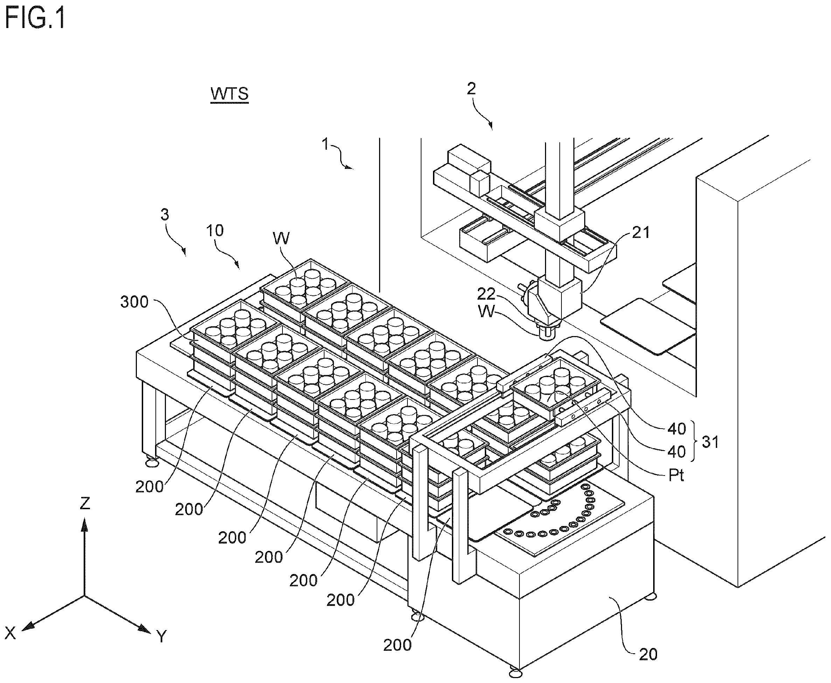

In Fig. 1, an XYZ Cartesian coordinate system is used in some cases to describe directions in the drawing. In the XYZ Cartesian coordinate system, a plane that is parallel to a horizontal plane is defined as an XY plane. A direction along this XY plane is denoted as X direction, and a direction orthogonal to the X direction is denoted as Y direction. A direction perpendicular to the XY plane is denoted as Z direction.

Fig. 1 is a schematic configuration diagram of a workpiece transport system WTS according to the present embodiment. As shown in Fig. 1, the workpiece transport system WTS includes a machine tool 1, a loader 2, and a workpiece supplier 3.

The machine tool 1 machines workpieces W. The shapes of the workpieces W are not particularly limited. The machine tool 1 is not particularly limited as long as the machine tool 1 machines the workpieces W, and is, for example, a lathe. A workpiece W to be machined by the machine tool 1 (a workpiece W before machining) may be referred to as "material W1". A workpiece W after being machined by the machine tool 1 may be referred to as "finished product W2".

The loader 2 transports materials W1 accommodated in the workpiece supplier 3 to the machine tool 1. The loader 2 receives workpieces W machined by the machine tool 1, that is, finished products W2, from the machine tool 1 and transports the finished products W2 to the workpiece supplier 3.

In the example shown in Fig. 1, the machine tool 1 and the workpiece supplier 3 are arranged side by side along the X direction, and the loader 2 includes a loader head 21 that is movable in the X direction. The loader head 21 has a loader chuck 22 that grips a workpiece W. The loader chuck 22 has a mechanism for gripping the workpiece W. The loader 2 grips a material W1 accommodated in the workpiece supplier 3 with the loader chuck 22 and transports the material W1 to the machine tool 1. The loader 2 grips the finished product W2 with the loader chuck 22 and transports the finished product W2 from the machine tool 1 to the workpiece supplier 3.

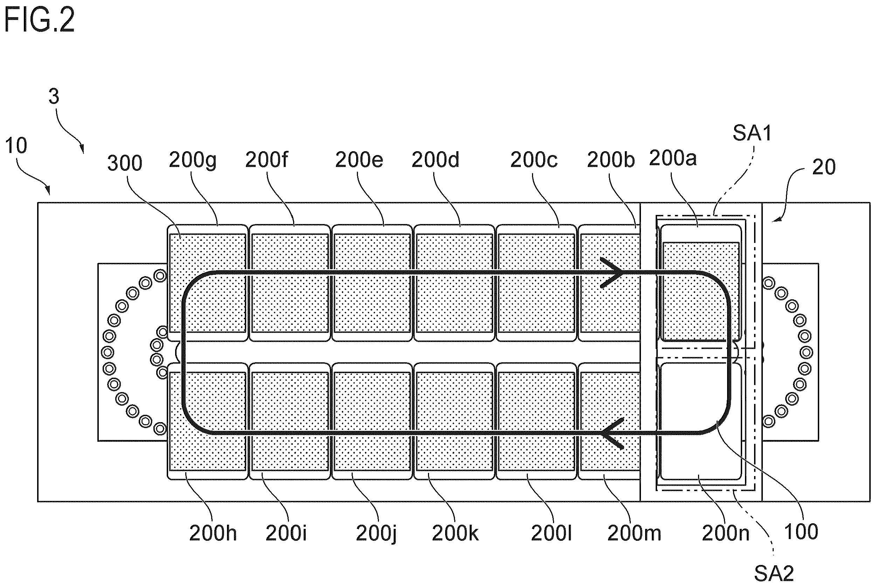

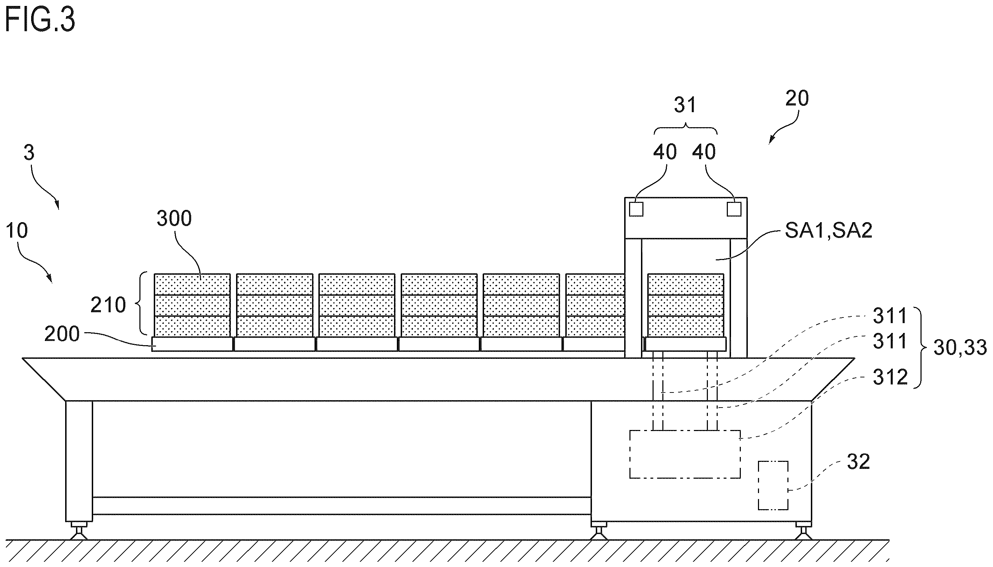

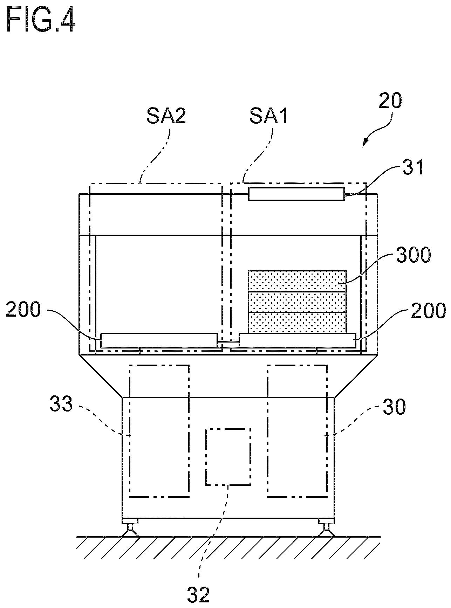

The workpiece supplier 3 accommodates materials W1 and finished products W2. Fig. 2 is a view of the workpiece supplier 3 according to the present embodiment as viewed from the Z direction. Fig. 3 is a view of the workpiece supplier 3 according to the present embodiment as viewed from the X direction. Fig. 4 is a view of the workpiece supplier 3 according to the present embodiment as viewed from the Y direction. The workpiece supplier 3 includes, for example, a transporter 10 and a tray changer 20.

As shown in Fig. 2, the transporter 10 has a circulation path 100 along which each of multiple pallets 200 is circulated. The circulation path 100 is formed, for example, along a horizontal plane (XY plane). That is to say, the transporter 10 horizontally circulates each of the multiple pallets 200 along the circulation path 100. It should be noted that the circulation path 100 is not necessarily required to be formed along the horizontal plane and may be, for example, a path that circulates vertically. As an example, the transporter 10 shown in the drawings circulates each of the multiple pallets 200 in a clockwise direction. However, the direction in which the pallets 200 are circulated may be a counterclockwise direction. The transporter 10 shown as an example in the drawings includes fourteen pallets 200a to 200n and circulates each of the pallets 200a to 200n in the clockwise direction.

One tray 300 or multiple trays 300 stacked in tiers can be placed on the pallet 200. Placement of the trays 300 on the pallet 200 may be performed, for example, by an operator or may be mechanically performed using a robot or the like. Multiple trays 300 stacked in tiers on one pallet 200 may collectively be referred to as a "tray group 210". Multiple workpieces W are placed on each tray 300. In the example shown in Fig. 1, a maximum of six workpieces W can be placed on one tray 300.

As shown in Fig. 1, in the case where a tray group 210 is placed on a pallet 200, the transporter 10 can circulate multiple tray groups 210 along the circulation path 100 by circulating each of the multiple pallets 200 along the transporter 10. The transporter 10 is, for example, a conveyor. In the case where the transporter 10 is a conveyor, the conveyor may be a belt conveyor, a roller conveyor, or a chain conveyor. The transporter 10 only needs to be capable of continuously transporting the pallets 200 along the circulation path 100, and the transport method is not particularly limited.

The tray changer 20 includes a first lifter 30, a holder 31, a movement controller 32, and a second lifter 33.

The first lifter 30 is capable of raising and lowering a pallet 200 (hereinafter, referred to as "first pallet") in a first specific region SA1 on the circulation path 100. In the case where one or more trays 300 are placed on the pallet 200 in the first specific region SA1, the tray changer 20 can raise and lower the one or more trays 300 by raising and lowering the pallet 200.

The first lifter 30 includes, for example, multiple extenders 311 and an elevation driver 312.

The extenders 311 are attached to the first pallet and can freely extend and retract in the up-down direction. The elevation driver 312 causes the extenders 311 to extend and retract. The elevation driver 312 raises the first pallet by extending the extenders 311, and the elevation driver 312 lowers the first pallet by retracting the extenders 311. As the elevation driver 312, for example, a hydraulic cylinder, a hydraulic motor, an electric cylinder, an electric motor, or the like may be employed. However, the first lifter 30 is not limited to this example, and may be of any configuration as long as it has a configuration capable of raising and lowering the first pallet.

The holder 31 holds, at a transfer position DP, the uppermost tray 300 placed on the first pallet when the first pallet is raised. In the case where only one tray 300 is placed on the first pallet, this tray 300 corresponds to the uppermost tray 300.

For example, the holder 31 includes a pair of holding members 40. The pair of holding members 40 are attached at preliminarily set positions. When the first pallet rises to an upper limit position, the pair of holding members 40 operate so as to approach each other, whereby the pair of holding members 40 come into contact with and hold the uppermost tray 300. As a result, the uppermost tray 300 is held at the transfer position DP. The transfer position DP is a position of the tray 300 at which the workpiece W is transferred by the loader 2. In other words, the loader 2 transfers the workpiece W to and from the tray 300 located at the transfer position DP.

The transfer of workpieces W between the tray 300 at the transfer position DP and the loader 2 includes both or either of removal of a material W1 from the tray 300 and placement of a finished product W2 onto the tray 300. When a finished product W2 is placed on the tray 300 at the transfer position DP, the loader 2 may place the finished product W2 at the position from which the material W1 has been removed.

The transfer of workpieces W will be described with reference to Fig. 1. Fig. 1 shows a state in which the loader 2 has removed a material W1 placed on the tray 300. In an initial state before the transfer of workpieces W is performed, only materials W1 are stored in each tray 300.

When the loader 2 starts to transfer workpieces W, it first removes the material W1 placed at a position Pt on the tray 300 (first operation). The loader 2 transports the material W1 removed in the first operation to the machine tool 1. The loader 2 then transfers the material W1 to the machine tool 1 and receives the workpiece W that has been machined by the machine tool 1 until then, that is, a finished product W2.

Upon receiving the finished product W2, the loader 2 transports the finished product W2 to the workpiece supplier 3 and places the finished product W2 at the position Pt (second operation). In other words, when one material W1 is removed from the tray 300 by the loader 2 in the first operation, the position Pt at which the material W1 had been placed becomes vacant, and therefore the loader 2 performs the second operation of returning the finished product W2 to the position Pt. Accordingly, in the tray 300 held at the transfer position DP, materials W1 are removed one by one by the loader 2, and finished products W2 are placed one by one. As a result, the workpieces W in the tray 300 held at the transfer position DP are eventually all replaced with finished products W2. When all of the workpieces W in the tray 300 held at the transfer position DP have been replaced with finished products W2, the transfer of the workpieces W between the tray 300 and the loader 2 is completed.

The movement controller 32 slide-moves the holder 31 between the first specific region SA1 and the second specific region SA2. The second specific region SA2 is a region on the circulation path 100 and is a region different from the first specific region SA1. In the example shown in Fig. 1, the second specific region SA2 is a region adjacent to the first specific region SA1. For example, rails are provided on which the holder 31 can slide-move over the distance between the first specific region SA1 and the second specific region SA2. Upon completion of transfer of a workpiece W, the movement controller 32 causes the holder to slide-move along the rails mentioned above, while the holder 31 is holding the tray 300 at the transfer position DP, from the first specific region SA1 to the second specific region SA2. Accordingly, the tray 300 for which the transfer of the workpieces W has been completed moves from the first specific region SA1 to the second specific region SA2.

The second lifter 33 is capable of raising and lowering a pallet 200 (hereinafter, referred to as "second pallet") in the second specific region SA2 on the circulation path 100. The second lifter 33 raises the second pallet so that the tray 300 held by the holder 31 that has slide-moved to the second specific region SA2 is stacked in tiers on the second pallet. In other words, trays 300 for which the transfer of workpieces W has been completed are stacked in tiers on the second pallet. The configuration of the second lifter 33 is similar to that of the first lifter 30, for example.

Here, the transporter 10 has, among the multiple pallets 200, one or more pallets 200 on which no tray 300 is placed (hereinafter, referred to as "empty pallet"). In other words, at least one empty pallet is required for the tray changer 20 to stack trays in tiers in the second specific region SA2. In the example shown in Fig. 1 and Fig. 2, a pallet 200n is an empty pallet.

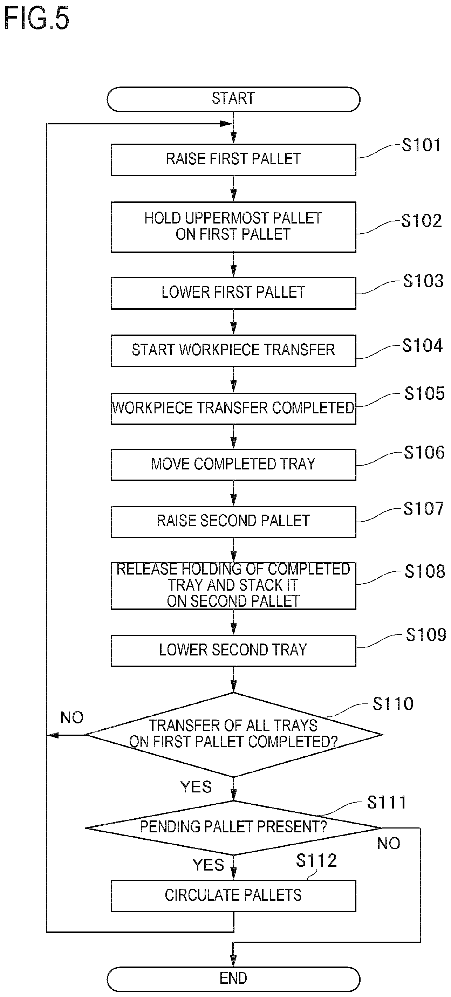

Hereinafter, the operation of the workpiece supplier 3 according to the present embodiment will be described, with reference to Fig. 5 to Fig. 13. Fig. 5 is a flowchart of the operation of the workpiece supplier 3 according to the present embodiment.

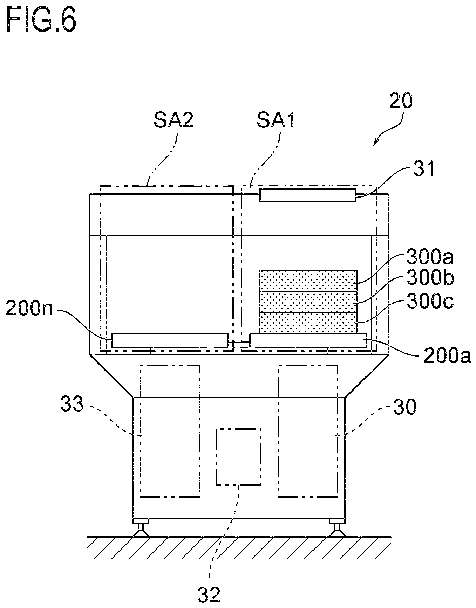

It should be noted that the example shown in Fig. 6 to Fig. 13 shows a case where the first pallet is a pallet 200a and the second pallet is a pallet 200n. As shown in Fig. 5, a tray 300a, a tray 300b, and a tray 300c are stacked in tiers on the pallet 200a in this order from the uppermost tier.

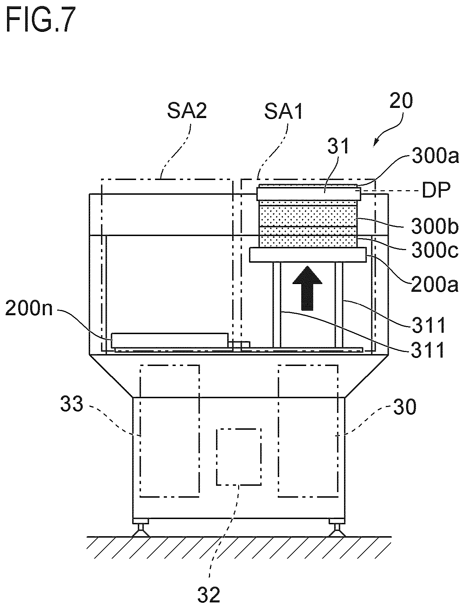

Fig. 6 is a diagram showing an initial state when the pallet 200h is loaded into the first specific region SA1. In the initial state, the pallet 200n located in the second specific region SA2 is an empty pallet. The tray changer 20 first operates the first lifter 30 from the initial state shown in Fig. 6 to raise the first pallet located at a lower limit position (Step S101 and Fig. 7).

The tray changer 20 has, for example, a first sensor (for example, a photoelectric sensor) that detects that the uppermost tray 300 of the first pallet has reached the transfer position DP when the first pallet is raised. The tray changer 20 raises the first pallet using the first lifter 30 until the tray 300 is detected by the first sensor. In other words, when the first sensor detects the tray 300, the tray changer 20 stops the raising operation for the first pallet performed by the first lifter 30.

Next, the tray changer 20 operates the holder 31 to hold the uppermost tray 300a at the transfer position DP (Step S102). In other words, the tray changer 20 holds the uppermost tray 300a that has reached the transfer position DP, thereby positioning the uppermost tray 300a at the transfer position DP.

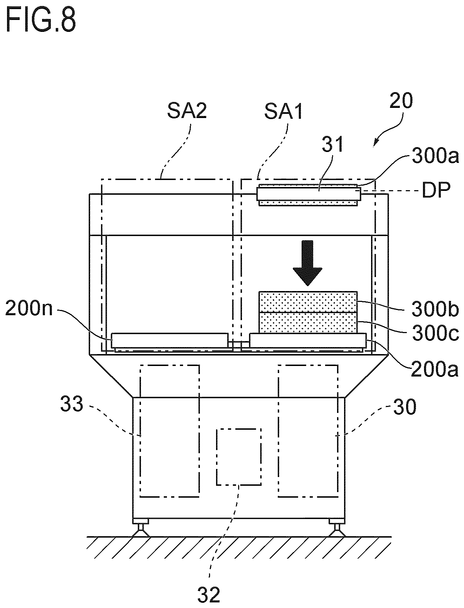

When the tray changer 20 holds the tray 300a by the holder 31, the tray changer 20 operates the first lifter 30 to lower the first pallet (Step S103 and Fig. 8). Then, when the first pallet is lowered to the lower limit position, the tray changer 20 stops the operation of the first lifter 30.

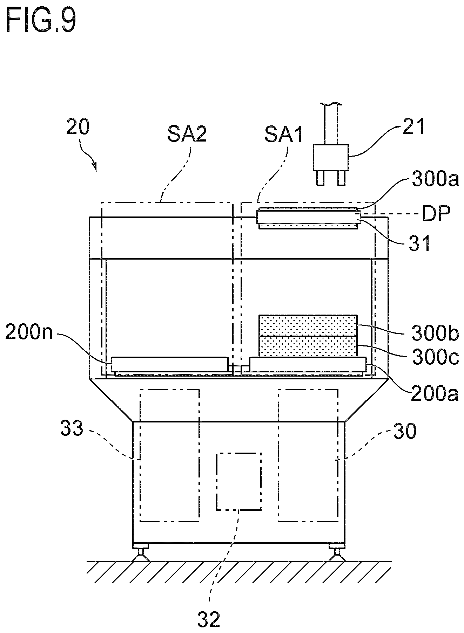

When the uppermost tray 300a is held at the transfer position DP and the first pallet has been lowered to the lower limit position, the transfer of workpieces W between the tray 300a held at the transfer position DP and the loader 2 is performed (Step S104 and Fig. 9).

For example, in Step S104, the loader 2 removes the material W1 from the tray 300a held at the transfer position DP with the loader chuck 22 and moves the loader head 21 to the machine tool 1 while holding the removed material W1. The loader 2 then transfers the material W1 to the machine tool 1 and receives the finished product W2 that had been machined by the machine tool 1 immediately beforehand. Upon receiving the machine tool 1, the loader 2 moves the loader head 21 to the workpiece supplier 3 and places the finished product W2 on the tray 300a held at the transfer position DP.

The loader 2 performs a series of operations including removing the material W1 from the tray 300a held at the transfer position DP, transporting the material W1 to the machine tool 1, and placing the finished product W2 on the tray 300a until no material W1 remains in the tray 300a. When all of the materials W1 in the tray 300a held at the transfer position DP have been removed, that is, when all of the workpieces W in the tray 300a have become finished products W2, transfer of the workpieces W between the tray 300a and the loader 2 is completed (Step S105).

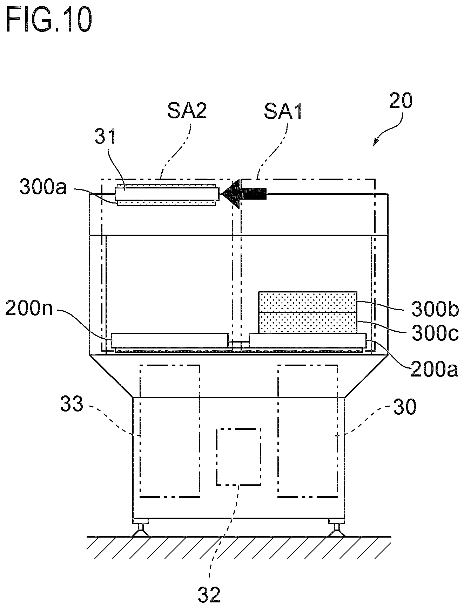

When the transfer of the workpieces W between the tray 300a held at the transfer position DP and the loader 2 is completed, the tray changer 20 moves the holder 31, which is holding the tray 300a for which the transfer of the workpieces W has been completed (hereinafter, referred to as "completed tray"), so that the holder 31 is positioned above the second specific region SA2 (Step S106 and Fig. 10).

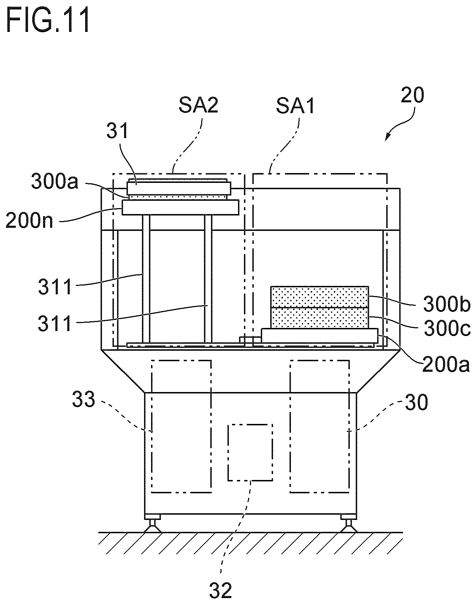

When the completed tray has moved to above the second specific region SA2, the tray changer 20 operates the second lifter 33 to raise the second pallet until the second pallet comes into contact with the completed tray from below (Step S107 and Fig. 11). In other words, the tray changer 20 raises the second pallet so that the completed tray is supported from below by the second pallet.

While the completed tray is supported from below by the second pallet, the tray changer 20 releases the holding of the completed tray by the holder 31, thereby placing the completed tray on the second pallet (Step S108). For example, the tray changer 20 releases the holding of the completed tray by separating the pair of holding members 40 from each other. When the holding of the completed tray by the holder 31 is released, the completed tray is placed on the second pallet.

In Step S108, placing the completed tray on the second pallet includes not only placing it directly on the second pallet but also stacking it on another completed tray already placed on the second pallet. That is to say, when another completed tray has already been placed on the second pallet, execution of the process of Step S108 causes the completed tray held by the holder 31 to be stacked on the other completed tray.

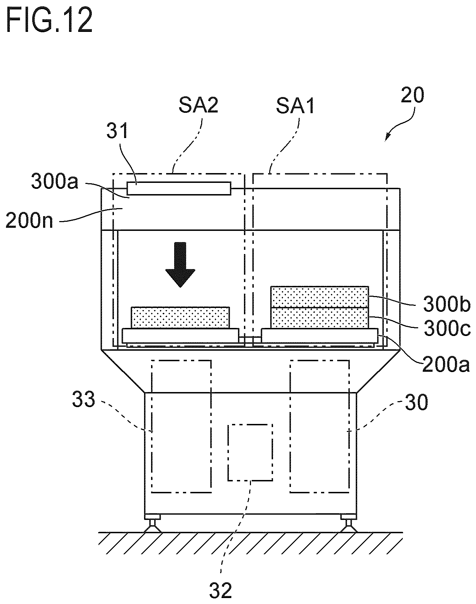

After releasing the holding of the completed tray by the holder 31 in Step S108, the tray changer 20 operates the second lifter 33 to lower the second pallet to the lower limit position (Step S109 and Fig. 12). After completion of Step S109, the tray changer 20 returns the holder 31 to the first specific region SA1.

Next, the tray changer 20 determines whether or not the transfer of workpieces W of all trays 300 on the first pallet has been completed (Step S110). As an example, the tray changer 20 has a first sensor that detects whether or not a tray is present on the first pallet, and if a tray 300 on the first pallet is detected by the first sensor, it determines that the transfer of workpieces W of all trays 300 on the first pallet has not been completed. For example, if a tray 300 on the first pallet is not detected by the first sensor, the tray changer 20 determines that the transfer of workpieces W of all trays 300 on the first pallet has been completed.

However, the present invention is not limited to this example, and the tray changer 20 may execute the process of Step S110 using a second sensor that detects that the number of tiers of trays 300 stacked on the second pallet has reached a predetermined number of tiers. For example, if the second sensor detects that the number of tiers of stacked trays 300 has reached the prescribed number of tiers, the tray changer 20 determines that the transfer of workpieces W of all trays 300 on the first pallet has been completed. The predetermined number of tiers corresponds to the number of the trays 300 that had been stacked in tiers on the first pallet. For example, the number of tiers of trays 300 stacked on each pallet 200 is standardized in advance to the same number (predetermined number of tiers).

If the transfer of the workpieces W of all trays 300 on the first pallet has not been completed, the tray changer 20 proceeds to the process of Step S101. That is to say, the tray changer 20 repeatedly executes the processes of Step S101 to Step S109 until no tray 300 remains on the first pallet.

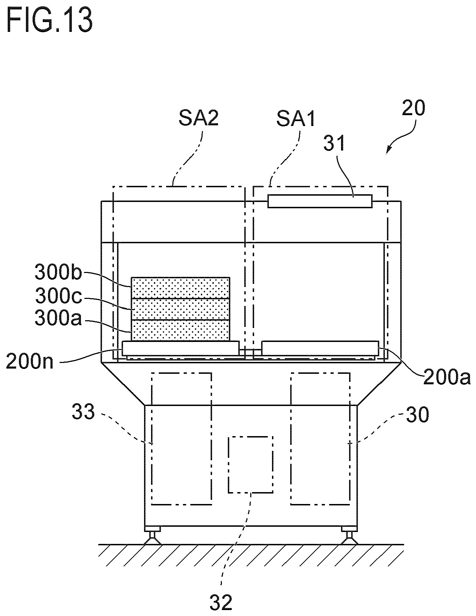

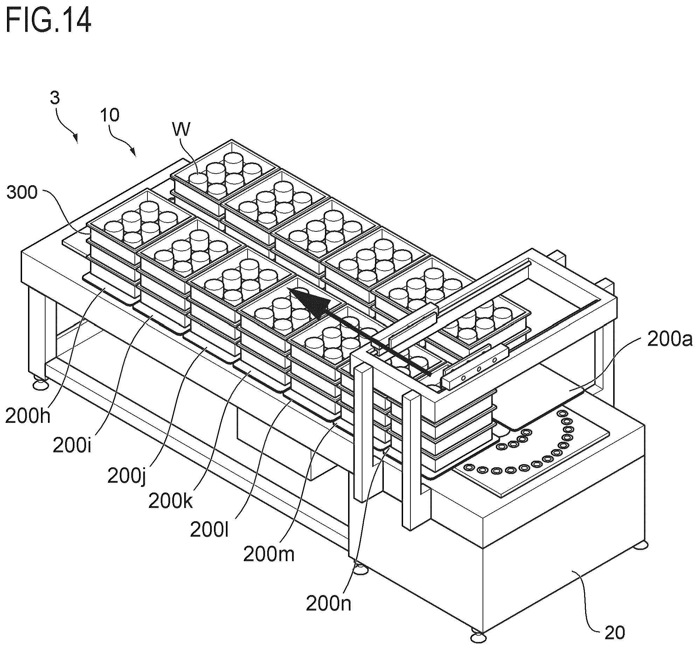

In the example shown in Fig. 6, the tray changer 20 executes the processes of Step S101 to Step S109 in each case where the uppermost tray 300 on the first pallet is a tray 300a, a tray 300b, and a tray 300c. As a result, as shown in Fig. 13 and Fig. 14, the completed trays are stacked in tiers on the second pallet in the order of the tray 300a, the tray 300b, and the tray 300c from the bottom.

If the tray changer 20 determines in Step S110 that the transfer of the workpieces W of all trays 300 on the first pallet has been completed, the tray changer 20 determines whether or not a pallet 200 before the transfer of the workpieces W (hereinafter, referred to as "pending pallet") remains on the circulation path 100 (Step S111). The pending pallet is a pallet on which a tray group 210 before transfer of the workpieces W is placed, that is, a tray group 210 in which only materials W1 are stored. For example, in Step S111, the tray changer 20 determines whether or not a final pallet has been detected. If the final pallet is detected, the tray changer 20 determines that no pending pallet remains on the circulation path 100. If the final pallet has not been detected, the tray changer 20 determines that a pending pallet remains on the circulation path 100. The final pallet is set, for example, as the empty pallet described above. For example, the workpiece supplier 3 may have a detection sensor 50 for detecting the final pallet among the multiple pallets 200.

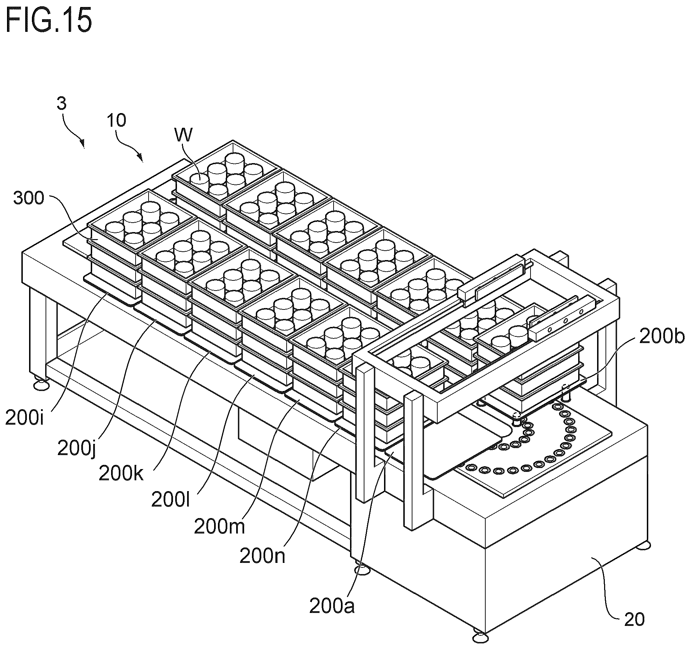

In Step S111, if the tray changer 20 determines that a pending pallet remains on the circulation path 100, the tray changer 20 transmits a signal indicating this state to the transporter 10. Upon receiving the signal, the transporter 10 executes a circulation operation in which each of the multiple pallets 200 is circulated by one pallet position (Step S112). For example, in Step S112, the transporter 10 performs a circulation operation in which each of the multiple pallets 200 is advanced by one pallet in the circulation direction from the state shown in Fig. 14. As a result, the transporter 10 places the pallet 200b in the first specific region SA1 and the pallet 200a in the second specific region SA2, as shown in Fig. 15.

The workpiece supplier 3 repeatedly executes the processes of Step S101 to Step S112 until it is determined in Step S111 that no pending pallet remains on the circulation path 100. If it is determined in Step S111 that no pending pallet remains on the circulation path 100, the workpiece supplier 3 determines that transfer of all workpieces W has been completed, and the operation of the entire workpiece transport system WTS stops, thereby completing the processing shown in Fig. 5.

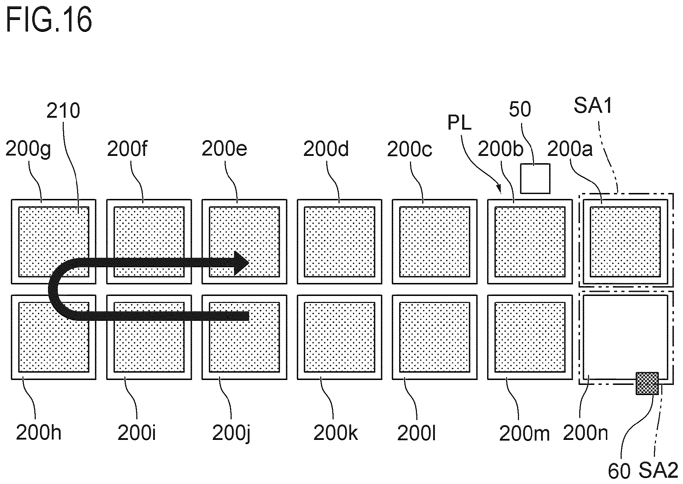

Hereinafter, a specific example of a method for detecting the final pallet will be described. Fig. 16 to Fig. 19 are diagrams showing the method for detecting the final pallet. The final pallet is provided with a tag 51 that can be detected by the detection sensor 50. The detection sensor 50 is provided at a position where the tag 51 of the final pallet can be detected when the final pallet circulates to a final pallet position PL, which is a pallet position located one pallet behind the first specific region SA1. The pallet position refers to a stop position of the pallet 200 on the circulation path. The term "behind" here refers to a direction opposite to the direction of circulation. In the example shown in Fig. 16, fourteen pallet positions are set. The transporter 10 circulates each of the multiple pallets 200 on the circulation path 100 by repeatedly performing a circulation operation that moves each pallet 200 to the next pallet position. In Fig. 16, among the fourteen pallet positions, the position at which the pallet 200b is stopped corresponds to the final pallet position PL.

In Fig. 16 to Fig. 19, tray groups 210 before transfer of workpieces W, that is, tray groups 210 in which only materials W1 are stored, are indicated by dots, and tray groups 210 after transfer, that is, tray groups 210 in which only finished products W2 are stored, are indicated by hatching.

Fig. 16 is a diagram showing a case in which the transporter 10 is in the initial state. The initial state shown in Fig. 16 is a state in which the pallet 200a has been loaded into the first specific region SA1. In the example shown in Fig. 16, the final pallet is set as the pallet 200n, which is arranged one position ahead of pallet 200a in the clockwise direction. In other words, in the example shown in Fig. 16, the first pallet is the pallet 200a and the second pallet is the pallet 200n.

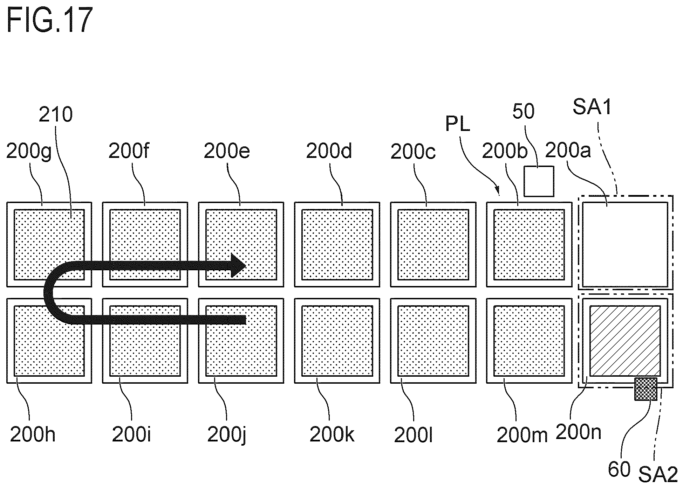

When the transporter 10 is set to the initial state, the tag 51 is attached to the pallet 200n, which is an empty pallet (the final pallet). The detection sensor 50 is arranged in advance at a position where the tag 51 can be detected when the final pallet is positioned at the final pallet position PL. After the transporter 10 has been set to the initial state and the tag 51 has been attached, the tray changer 20 performs a tray exchange operation of the tray changer 20 (Steps S101 to Step S110) from the initial state shown in Fig. 16, and finally stacks in tiers all trays 300 that had been placed on the pallet 200a on the final pallet as shown in Fig. 17.

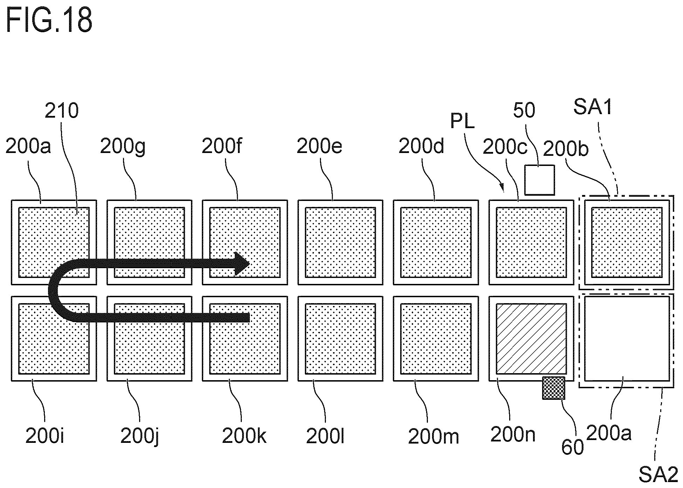

When all trays 300 are stacked in tiers on the pallet 200n, the workpiece supplier 3 performs a circulation operation in which each of the multiple pallets 200 is circulated by one pallet in the circulation direction. As a result, as shown in Fig. 18, the pallet 200n is unloaded from the second specific region SA2, the pallet 200a is arranged in the second specific region SA2, and the pallet 200b is arranged in the first specific region SA1. In the state shown in Fig. 18, the pallet 200n, which is the final pallet, is not arranged at the final pallet position PL. Therefore, the final pallet is not detected in Step S111, and the tray changer 20 proceeds to Step S101.

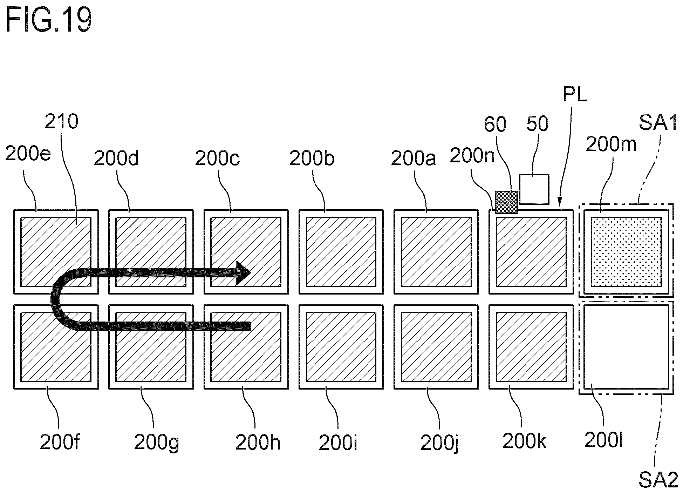

The workpiece supplier 3 repeatedly executes the processes from Step S101 to Step S112 until the detection sensor 50 detects the tag 51. Fig. 19 is a diagram showing a state in which the final pallet is arranged at the final pallet position PL. As shown in Fig. 19, when the pallet 200n, which is the final pallet, is arranged at the final pallet position PL, the detection sensor 50 detects the tag 51 provided on the pallet 200n and transmits the detection result to the tray changer 20.

The tray changer 20 performs the tray exchange operation (Step S101 to Step S110) from the state shown in Fig. 19, and in Step S111 determines whether or not the final pallet has been detected on the basis of the received detection result from the detection sensor 50. If the final pallet is detected, it is determined that the transfer of all workpieces W has been completed, the operation of the entire workpiece transport system WTS is stopped, and the processing shown in Fig. 5 is completed.

As described above, the workpiece supplier 3 according to the present embodiment circulates multiple tray groups along the predetermined circulation path 100 and holds one tray 300 on a pallet loaded into the first specific region SA1 on the circulation path 100 at the transfer position DP. The workpiece supplier 3 can stack the tray 300 at the transfer position DP in tiers onto the pallet 200 in the second specific region SA2 on the circulation path. With such a configuration, trays can be loaded into the first specific region SA1 or unloaded from the second specific region SA2 multiple times without using a handcart, thereby reducing temporary machine stoppages caused by loading or unloading operations performed by the operator.

Furthermore, trays 300 containing materials W1 can be loaded into the transporter 10 during operation without temporarily stopping the operation of the workpiece transport system WTS, such as the transfer of workpieces W between the loader 2 and the tray 300 and the tray exchange operation.

For example, while the tray exchange operation and transfer of workpieces W are being executed, the operator removes a tray group 210 on the pallet 200 outside the first specific region SA1 and the second specific region SA2, that is, a tray group 210 containing only finished products W2, and replaces them with a tray group 210 containing only materials W1. In other words, the operator can load a tray 300 containing materials W1 into the transporter 10 during the tray exchange operation and the transfer of the workpieces W.

As a result, trays 300 containing materials W1 can be loaded into the transporter 10 during operation without temporarily stopping the operation of the workpiece transport system WTS, such as transfer of workpieces W between the loader 2 and the tray 300 and the tray exchange operation. As a result, trays can be loaded into the first specific region SA1 or unloaded from the second specific region SA2 without using a handcart, thereby reducing temporary machine stoppages caused by loading or unloading operations performed by the operator.

The above embodiment discloses the following configurations.

### Configuration 1

A workpiece supplier 3 that arranges, from among a plurality of trays 300, a tray 300 for which transfer of workpieces W is performed by a loader 2, at a predetermined position (transfer position DP), the workpiece supplier 3 comprising:
a plurality of pallets 200, each having placed thereon a group of trays 300 in which a plurality of the trays 300 are stacked in tiers;
a transporter 10 that circulates each of the plurality of pallets 200 along a predetermined circulation path 100; and
a tray changer 20 that is capable of raising and lowering the pallet 200 that has been loaded into a first specific region SA1 on the circulation path 100 and that holds, at the predetermined position, the tray 300 of an uppermost tier on the pallet 200 that has been raised,
wherein the tray changer 20 stacks the tray 300 at the predetermined position in tiers onto the pallet 200 in a second specific region SA2 on the circulation path 100.

### Configuration 2

The workpiece supplier 3 according to configuration 1,
wherein the transfer of workpieces W includes a first operation in which a material is removed by the loader 2 from the tray 300 at the predetermined position, and a second operation in which a finished product is placed by the loader 2 at a position on the tray where the material removed in the first operation was placed.

### Configuration 3

The workpiece supplier 3 according to configuration 1 or 2,
wherein the tray changer 20 stacks in tiers, onto the pallet 200 in the second specific region SA2, the tray 300 for which transfer of workpieces W has been completed.

### Configuration 4

The workpiece supplier 3 according to any one of configurations 1 to 3,
wherein, upon stacking all of the pallets 200 in the first specific region SA1 in tiers in the second specific region SA2, the transporter 10 circulates each of the plurality of pallets 200 so as to thereby unload the group of trays 300 in the second specific region SA2 from the second specific region SA2 and load a new group of trays 300 into the first specific region SA1.

### Configuration 5

The workpiece supplier 3 according to any one of configurations 1 to 4,
wherein the tray changer 20 includes
a first lifter 30 capable of raising and lowering a first pallet that is the pallet 200 in the first specific region SA1,
a second lifter 33 capable of raising and lowering a second pallet that is the pallet 200 in the second specific region SA2,
a holder 31 that holds the tray 300 of the uppermost tier on the first pallet at the predetermined position when the first pallet is raised, and
a movement controller 32 that slide-moves the holder between the first specific region SA1 and the second specific region SA2, and
wherein, upon completion of transfer of workpieces W, the movement controller 32 causes the holder to slide-move, while the holder is holding the tray 300 at the predetermined position, from the first specific region SA1 to the second specific region SA2.

Configuration 6

The workpiece supplier 3 according to any one of configurations 1 to 5,
wherein the tray changer 20 raises the second pallet by means of the second lifter and stacks in tiers, on the second pallet, the tray 300 held by the holder that has been slide-moved to the second specific region SA2.

### Configuration 7

A control method for a workpiece supplier 3 that arranges, from among a plurality of trays 300, a tray 300 for which the transfer of workpieces W is performed by a loader 2, at a predetermined position,
wherein the workpiece supplier 3 has a circulation path 100 that is preliminarily set,
the control method comprising:
   circulating a plurality of groups of trays 300, in each of which a plurality of the trays 300 are stacked in tiers, along the circulation path 100;
   raising the tray 300 of an uppermost tier in the first specific region SA1 on the circulation path 100 and holding the tray 300 at the predetermined position; and
   stacking, upon completion of transfer of workpieces W, the tray 300 at the predetermined position in tiers in the second specific region SA2 on the circulation path 100.

One or more of the requirements described in the above embodiment may be omitted in some cases. Furthermore, one or more of the requirements described in the above embodiment may be combined where appropriate. The order of executing procedures shown in the present embodiment can be implemented in an arbitrary order unless the result of the previous procedure is used in the following procedure. While operations in the above embodiment have been described with expressions such as "first", "next", and "subsequently" for the sake of convenience, the operations need not always be implemented in that order. The contents of Japanese Patent Application No. 2024-002670 and all documents cited in the detailed description of the present invention are incorporated herein by reference to the extent permitted by law.

### Description of Reference Signs

- 1:: Machine tool
- 2:: Loader
- 3:: Workpiece supplier
- 10:: Transporter
- 20:: Tray changer
- 100:: Circulation path
- 200:: Pallet
- 300:: Tray

## Claims

1. A workpiece supplier that arranges, from among a plurality of trays, a tray for which workpiece transfer is performed by a loader, at a predetermined position, the workpiece supplier comprising:
a plurality of pallets, each having placed thereon a group of trays in which a plurality of the trays are stacked in tiers;
a transporter that circulates each of the plurality of pallets along a predetermined circulation path; and
a tray changer that is capable of raising and lowering the pallet that has been loaded into a first specific region on the circulation path and that holds, at the predetermined position, the tray of an uppermost tier on the pallet that has been raised,
wherein the tray changer stacks the tray at the predetermined position in tiers onto the pallet in a second specific region on the circulation path.

2. The workpiece supplier according to claim 1,
wherein the workpiece transfer includes a first operation in which a material, which is the workpiece before machining, is removed by the loader from the tray at the predetermined position, and a second operation in which a finished product, which is the workpiece after machining, is placed by the loader at a position on the tray where the material removed in the first operation was placed.

3. The workpiece supplier according to claim 1,
wherein the tray changer stacks in tiers, onto the pallet in the second specific region, the tray for which the workpiece transfer has been completed.

4. The workpiece supplier according to claim 3,
wherein, upon stacking all of the pallets in the first specific region in tiers in the second specific region, the transporter circulates each of the plurality of pallets so as to thereby unload the group of trays in the second specific region from the second specific region and load a new group of trays into the first specific region.

5. The workpiece supplier according to claim 1,
wherein the tray changer includes
a first lifter capable of raising and lowering a first pallet that is the pallet in the first specific region,
a second lifter capable of raising and lowering a second pallet that is the pallet in the second specific region,
a holder that holds the tray of the uppermost tier on the first pallet at the predetermined position when the first pallet is raised, and
a movement controller that slide-moves the holder between the first specific region and the second specific region, and
wherein, upon completion of the workpiece transfer, the movement controller causes the holder to slide-move, while the holder is holding the tray at the predetermined position, from the first specific region to the second specific region.

6. The workpiece supplier according to claim 5,
wherein the tray changer raises the second pallet by means of the second lifter and stacks in tiers, on the second pallet, the tray held by the holder that has been slide-moved to the second specific region.

7. A control method for a workpiece supplier that arranges, from among a plurality of trays, a tray for which the workpiece transfer is performed by a loader, at a predetermined position,
wherein the workpiece supplier has a circulation path that is preliminarily set,
the control method comprising:
circulating a plurality of groups of trays, in each of which a plurality of the trays are stacked in tiers, along the circulation path;
raising the tray of an uppermost tier in the first specific region on the circulation path and holding the tray at the predetermined position; and
stacking, upon completion of the workpiece transfer, the tray at the predetermined position in tiers in the second specific region on the circulation path.
